Europäisches Patentamt

European Patent Office

Office européen des brevets

Publication number: **0 289 986**
**A2**

## EUROPEAN PATENT APPLICATION

Application number: **88107068.4**

Date of filing: **03.05.88**

Int. Cl.⁴ **G11B 15/68 , G11B 17/22**

Priority: **08.05.87 IT 2043487**

Date of publication of application:
**09.11.88 Bulletin 88/45**

Designated Contracting States:
**AT BE CH DE ES FR GB GR LI NL SE**

Applicant: **INDELT COSTRUZIONI
ELETTRONICHE SRL
Via G. Leopardi 13
I-57121 Livorno(IT)**

Inventor: **Venturini, Maurizio
Via Giuseppe Verdi 185
I-57100 Livorno(IT)**

Representative: **Michelotti, Giuliano et al
c/o SAIC BREVETTI S.r.l. Viale Bianca Maria
15
I-20122 Milano(IT)**

System and apparatus for the automatic handling of pre-recorded radio or television programmes, or like activities and its particular store.

In an apparatus for the automatic handling of prerecorded radio and television programmes, store in form of filing cabinet (70) served by an arm (52), provided with pliers (54) adapted to grasp cartridges of recorded tapes or the like, displaceable along two first perpendicular axes, on which coordinates of cells or pigeon-holes (72) of said filing cabinet (70) are defined, said axes consisting of horizontal rails (30, 36) and vertical rails (50), to transfer said cartridges from said filing cabinet (70) to an assembly of recording-playing devices for magnetic tape (80, 82, 84) adjacent to said filing cabinet, said store and said recording-playing devices being controlled by a computer assembly (90) together with a direction desk (92) and with means for broadcasting said programmes.

## "System and apparatus for the automatic handling of pre-recorded radio or television programmes, or like activities and its particular store"

The present invention relates to a system and apparatus permitting the automatic, computer assisted handling of prerecorded radio or television programmes, for example prerecorded on magnetic tape.

At the radio and television broadcasting stations it is usual and extremely widespread practice to broadcast programmes which are realized in proper studios or theaters, or are originated from external, services, not as direct transmission, i.e. at the same time of office realization, but rather in delayed transmission, the programmes being easily recorded at the studios or theaters or the service places and then the broadcasting being carried out during the time intervals in which the audience is presumbly mostly interested. To this end apparatus are used adapted to read out said recorded programmes and to broadcast them. Considering particularly the television broadcasting stations, said apparatus are usually playing devices for videotapes by which the signals generating the images and sounds of a service or television programme be broadcast are read out of a magnetic tape.

Said practice is particularly adapted by the private broadcasting stations which in this manner achieve relevant administration economies. However the private broadcasting stations must comply with a number of local regulations and limitations ruling the broadcasting of television programmes, among which the limitation of the broadcasting of a programme to a determined area or region, and, owing to the fact that these private broadcasting stations have to find out the sources for the economical support of their broadcastings advertising spots are to be interposed between the broadcastings of information and/or leisure programmes. Now, owing to the regional limitations to the broadcastings, the advertising spots may vary both as regards their length and as regards the contents from one to another region and thus from one broadcasting station to another even within the same network , due to the fact that some advertisements can be of only local interest.

In order to interpose between the programmes to be broadcast advertising transmissions (the socalled advertising spots well known to the skilled in the art) different ways can be selected.

According to a first way on the recording substrate for the programmes, namely the magnetic tape, cutting operations are carried out by means of the cutting and splicing of lengths of advertising tape to the programme tape.

Such a type of operation, extremely long and annoying, requires high skill in selecting the cutting points, does not ensure very good results, leads to mistakes and is objectionable owing to bad splicing and separation of the tape lengths and, mainly, gives a result which can be difficultly changed or amended and consequently can be handled in a rigid manner.

According to a second way the cutting is carried out by playing in different times from different tapes and recording on only one virgin tape, according to a whatsoever handling schedule (as for example: 15 minutes of cinematographic programme, 1 minute of advertising spot A, 1 minute of spot B, 1.5 minutes of spot C, 1.5 minutes of spot D, 15 minutes of cinematographic performance etc.) of the whole of programmes and advertising insertions which are thereafter broadcast in uninterrupted manner. This way is easier than the first one and with a rather precise carrying out of the cutting operations leads to excellent results as regards the selection of the point at which the programme is stopped and the advertising spots are inserted; moreover it permits a modification at will of the lenght and of the type of spot to be inserted. However, this method has some serious drawbacks: first of all it requires a long time and the attention of at least one operator to play and record in a perfectly controlled manner both the programmes and the advertising spots; secondly, owing to the fact that images and sounds originated from previous recordings must be recorded again on a tape, a not negligible price is certainly paid as regards the quality of said images and sounds because each passage from playing to recording causes a quality degradation which can be appreciated as a loss of definition and of contrast and the presence of parasite troubles in the image as well as flattening of the timber and loss of power dynamics together with the appearance of parasite rumors in the sound. Furthermore these drawbacks can be dramatically multiplied when several modificatiosn of programmes must be carried out with repeated operations of deletion and subsequently recording.

According to a third way it might be possible to use as many playing devices as the programmes and the groups of advertising spots are, to be broadcast for the whole period of daily activity of the broadcasting station, to be activated and stopped in succession according to a carefully - scheduled direction.

In this way optimum results are certainly obtained from the point of view of the quality of the images and of the sounds, but there are required many highly qualified operators for the manoeuvering and controlling of the playing devices and a particularly wise and capable direction to avoid handling mistakes such as blank times or abrupt stopping of a programme due to lapse time.

Furthermore such a way is particularly liable to human errors which may lead to repetitions or to jumping of scenes of a programme with the evident damage to the understanding and pleasantness of the broadcast services.

The drawbacks of such a method might be highly reduced by using a great number of tape playing apparatus (corresponding to about the double of the daily operating hours of a service or broadcasting or corresponding to the number of cartridges necessary for an operation day) and by coordinating them by means of a computer which controls the startings and stoppings at the desired pieces which are recorded.

In order to give a remedy to to aforesaid drawbacks and at the same time to reduce the expenses, as regards the persomel, the apparatus and the times. of a radio or television broadcasting station, the method and apparatus of the present invention can be used.

Said method consists in placing in a precision addressable store a number of cartridges of magnetic tapes having recorded thereon the programmes, the communications and generally all the information which must be broadcast, in using a limited number of playing devices for magnetic tapes or the like within which, according to a - scheduled succession. the cartridges mechanically removed from said store are inserted and in using computer means. suitably programmed to operate said playing devices and to control a desk for the direction or mixing of images and sounds having the purpose of permitting the broadcasting only of those desired images and sounds. selected among those which are available.

Preferably the method utilizes a store in form of a filing cabinet. in which the position of the pigeon-holes may be given in term of numerical coordinates. combined with a plurality of magnetic tape playing devices. an arm movable between the coordinates of said store and the openings for the introduction of cartridges in said playing devices, said arm being controlled by said computer means to remove cartridges from said store, introducing them in said playing devices and viceversa, as well as to displace cartridges from one pigeon-hole to another of said store, said computer means furthermore providing on the basis of programme self-contained to control the starting and the stopping and the unwinding of tapes within the same playing devices, as well as to control a direction desk having the above mentioned purpose or permitting the broadcasting only of the desired images and sounds.

According to a more preferred embodiment. said method comprises a computer provided with time and date scanning means to determine the times at which a determined programmes is to be broadcast, memory means on which the broadcasting handling programmes are recorded and from which general or particular rules are taken relating to the broadcasting managing, displaying means to inform an operator of the broadcasting programmss to be carried out during a whole programmed time period and printing means to permanently print on a solid substrate, such as paper, instructions, reminders and directions of the attendands for the broadcasting station.

In a still more preferred way, said method comprises, for said movable arm. means carrying out displacements of the same along three coordinates which are mutually perpendicular and pliers means which can be controlled to grasp and free cartridges between the pigeon-holes of said store and the cartridge introduction openings in said playing means. said displacing means for said movable arm and said pliers means being controllable by said computer means.

The apparatus according to the present invention comprises a store or shed of cartridges consisting in a rectangular matrix filing cabinet divided in a number of pigeon-holes of a shape suitable to contain each one a cartridge of magnetic tape, each pigeon-hole having assigned thereto a pair of coordinates, supported by a frame to which there are associated a certain number of tape playing devices and also having along two parallel side two sliding guides for two carriages connected by a third guide perpendicular to the two said parallel guides, said third guide in turn supporting a device slidable along the same and provided with an arm which can be advanced and retracted along a direction perpendicular to both directions of said first and second guides and of the third guide and provided with pliers which can be opened and closed under control to grasp and free said tape cartridges, one of said parallel guides being provided with a motor and with transmission means for the movement of the carriages bearing said third guide along said parallel guides, said third guide being provided with a motor and with transmission means to move the said slidable device along said third guide, said slidable device being lastly provided with a motor and with transmission means for the movement of said arm, and said pliers being provided with at least an actuator which controls the opening and closing thereof.

According to a particularly preferred embodiment. said pliers consist of two parallel jaws, at least one of which is movable. spaced by a spacing block, the movable jaw being movable towards and from the fixed jaw by means of an actuating mechanism and the whole pliers being capable of advancing and retracting with respect to said store and with respect to said tape playing devices by means of at least an axially slidable arm which, besides moving said pliers, provides for the actuation of at least a pushing mechanism at the time at which, after a cartridge has been inserted into the introduction opening of a tape playing device, said pliers open, in order to ensure the definitive introduction of the cartridge within the playing device and the subsequent retraction of the pliers after the cartridge has been freed.

According to a mostly preferred embodiment, said actuating mechanism of the pliers jaw consist of a spring system by which the movable jaw is maintained closed against the fixed jaw and of at least an electromagnet, or better two electromagnets to get a more balanced action, which, upon energisation, causes said movable jaw to be opened with respect to said fixed jaw.

Alternatively, both jaws can be movable with respect to a central pliers body, the jaws being mantained in said closed condition by said spring system and in the open condition by said at least one electromagnet.

According to a further preferred embodiment, the axially slidable arm is at least double and terminates with two pushing mechanisms, positioned in the pliers block spacing the two jaws, said block being restricted in its displacement to a value lower than that of said slidable arm, wherein the difference between the effective displacement of said arm and the displacement of said block determines the advancement of said pushing mechanism and said advancement is also controlling the energisation of said electromagnet causing the pliers jaw opening.

The features and advantages of the present invention shall be better understood from the following detailed description of an embodiment thereof, given for non limiting purpose, accompanied by the enclosed drawings, in which:

fig. 1 shows the apparatus of the invention associated to a computer for its control and to a direction desk for radio-television broadcastings;

fig. 2 shows in enlarged scale only the apparatus of the invention to better illustrate some details;

fig. 3 shows in enlarged and detailed view the slidable arm and plier assembly according to the present invention;

fig. 4 is a cross-section view of details of the slidable arm and pliers assembly of figure 3.

Considering the figures, it is seen that the apparatus 10 according to the invention consists of framework 12 formed by two stands 14 and 16, connected by two cross bars 18 and 20, supported by two feet 22 and 24 and bearing two upper shelves 26 and 28.

Between the two shelves 26 and 28 an upper guide or rail 30 is provided anchored to two end supporting members 32 and 34 and between the two feet 22 and 24 a lower guide or rail 36 extends which is anchored to end supporting members, 38 and 40 respectively.

Along the upper rail 30 an upper carriage 42 is slidably movable which is supported by rollers 44 and onto the lower rail 36 a lower carriage 46 is slidable and is supported by rollers 48.

The two carriages 42 and 46 are connected by a guide or rail 50, vertically positioned and provided, in a slidable movable manner along the same, a supporting, advancing and actuating assembly for pliers 54, which are also called the movable arm 52.

A first motor 56, preferably of the step-by-step type, provided with a suitable pinion gear, actuates a toothed belt 58 which causes the carriages 42 and 46 to be displaced and consequently causes the orizontal movement, namely along the axis X, of the vertical guide or rail 50.

A second step-by-step motor 60, fixed to said vertical rail 50, causes, through another mechanism consisting of a pinion gear and of a toothed belt, a vertical movement of the said assembly or arm 52 to take place along the axis X.

A third motor 62, by means of a related mechanism of comprising the pinion gear 64 and the toothed belt 66, causes the arm 52 and the pliers 54 to advance along the axis Z.

Between the stands 14 and 16 and between the cross bars 18 and 20 the framework 12 supports a store or filing cabinet 70 formed by a number or cells or pigeon-hols 72 adapted to house cartridges of magnetic tapes onto which all the information to be broadcast through the radio-television broadcasting station are recorded.

Among these pigeon-holes a particular one . such as for example the first pigeon-hole at the upper left corner . indicated by the reference number 74, does function as starting or resetting pigeon-hole (HOME) in front of which the pliers 54 are always positioned when the control mechanism of the apparatus according to the present invention is started or reset.

The lower cross bar 20 supports a supporting plane 76 for a certain number of recording-playing devices for magnetic tapes, (herein represented in number of three) 80, 82, 84. said recording-playing devices being chargeable with cartridges removed from the pigeon-holes 72 of the filing cabinet or store 70.

A computer assembly 90 controls the apparatus 10 of the present invention, the recording-playing devices 80, 82, 84 and a direction desk 92 by which all the control mixing and images and sound selection operations are attended to.

The computer assembly 90 may typically comprise a desk 94 supported by a frame 96 provided with lockers 97 and 98 housing components of said computer.

A keyboard 100 is positioned onto said desk and permits an operator to operate the computer and to check an optically reading device 102 capable of reading optical bands recorded on the envelopes of cartriges of magnetic tape for their quick identification and classification.

On the same desk 94 there are positioned also a telephon set 104 permitting to the operator to give or receive instructions, as well as to put the computer into comunication with external units (if needed), and a printer 106 capable of printing if desired instructions or executive directions for the broadcasting station onto a proper paper band 108 of the type used for printers.

A cathodic ray displaying device 110 permit data, information, instructions, directions, programme patterns, variations, mis-function signals and the like, related to the managing of the television broadcasting station, to be made viewable onto its screen.

An assembly 112 for the reading and recordal of magnetic disks is provided with two slots, 114 and 116, adapted to respectively receive program disks and file disks of the cartridges present in the store 70, the program disk containing the broadcasting programme of a certain period, for example one day, of the broadcasting station and the file disks containing data relating to the contents of each cartridge and the position (coordinates) of the same within the store 70.

A clock-precision calendar assembly 118 containing a number of numerical displaying devices 120 for time data, such as day, hour, minutes and second minutes, and keyboard 122 for the selection of times, permits the broadcastings to be - scheduled by putting them in desired hour times for the whole period one or more days, permitting a totally automatic handling of the station even for more than one day.

Obviously said clock-calendar 118 must be operative also when power interruptions in the mains occurs and to this end it is provided with a buffered battery supply , which is maintained always in the charged condition.

The aforesaid direction desk 92 essentially consists of a control table 126 having devices for the control of images and sounds, and of a displaying assembly formed by a number of cathodic ray displaying devices 128, said direction desk receiving through a number of cables 130 signals coming from the recording-playing devices 80, 82 and 84 and exchanging data and directions with the computer 90 through a connecting line 132. The computer 90 does also exchange data and directions through a line 134 with the recording-playing devices 80, 82 and, 84 and through a line 136, with the apparatus 10 of the present invention.

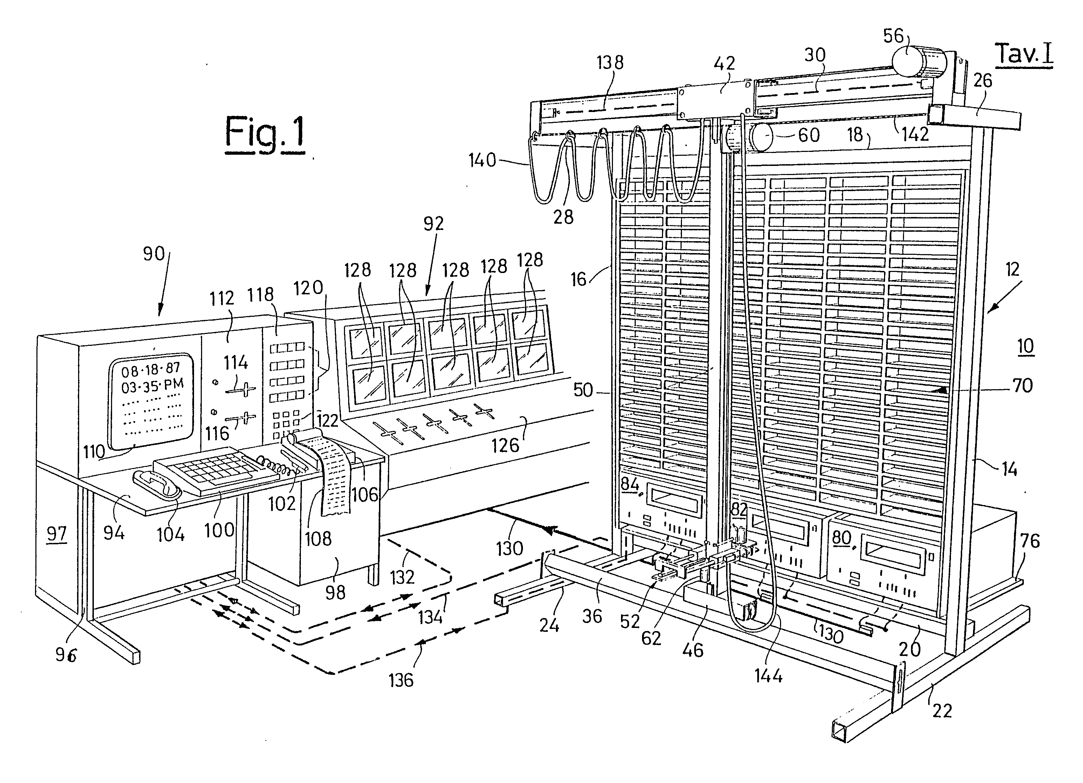

As it is shown in figure 1, said line 136 may enter through the supporting foot 24, extending through the stand 16 and the upper shelf 28 up to its front end at which it branches in a first line 138, used for the control of the step-by-step motor 56, and in a flexible and extendable cable 140, slidably supported by a string 142, connecting said shelf 28 with said upper carriage 42.

From the upper carriage 42 then a second flexible cable 144 descends so as to connect the same with the movable arm assembly 52 and for the actuation of the pliers 54.

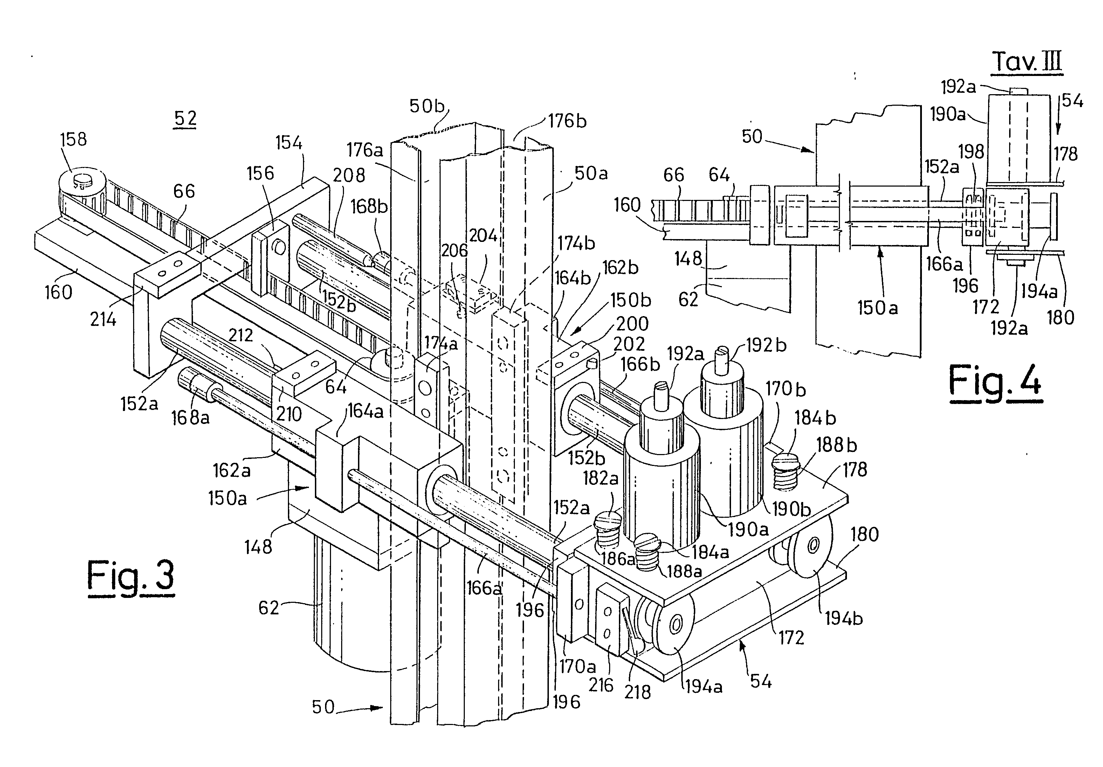

Said assembly 52 is more detailedly shown in figure 3, it being formed by a block 148 having mounted at its lower part the already mentioned motor 62 and sidewise secured two essentially parallepipedal blocks 150a and 150b, provided with longitudinal passages within which cylindrical rods 152a and 152b are slidably housed connecting the above mentioned players 54 with a displacement bridge anchored by a clamp 156 to the said toothed belt 66 actuated by means of the pinion 64 from the said motor 62.

The said toothed belt 66, actuated by the pinion gear 64, rotates around an idle pinion 158 supported by a bracket 160 fastened to the block 148 supporting the motor 62. The two essentially parallelepipedal blocks 150a and 150b comprise two main bodies 162a and 162b respectively provided with wings 164a and 164b outwardly protruding and permitting the sliding motion of respective cylindrical rods 166a and 166b which are respectively provided with stops 168a and 168b at the left end and terminating in said wings 170a and 170b secured to a central body 172 of the said pliers 54.

The two blocks 150a and 150b are internally provided with two small guide blocks 174a and 174b engaged with two slots 176a and 176b defined between two U-shaped profiled members 50a and 50b forming the said vertical guide or rail 50.

The figures 3 and 4 shall be now taken into consideration to detailedly understand the structure of the pliers 54. Said pliers comprise a central body 172 enclosed between an upper jaw 178 and a lower jaw 180, said jaws being kept tight against the central body 172 by means of screws 182a, 182b, 184a, 184b etc. provided with springs 186a, 186b, 188a, 188b tightening said jaws against said central body.

Electromagnets, herein represented in the number of two, comprising an outer jacket 190a, 190b and an inner movable armature 192a, 192b respectively, are useful to retract the jaws 178, 180 from the central body 172 of the plier 54, the outer jackets 190a and 190b being secured to the upper jaw 178 and the movable armatures 192a and 192b being secured to the lower jaw 180.

The cylindrical rods 152a and 152b terminate in the pliers 54 with two disks 194a and 194b forming two ejectors for items grasped by the pliers 54, particularly the video-cartridges used in the present invention, said ejectors being actuated at the end of the stroke of the arm 52 when the jaws 178 and 180 of the pliers 54 are opened.

Behind the central body 172 a counterplate 196 is provided having suitable seats for the housing of springs 198 having the purpose of being compressed during the ejection of the cartridges at the end of the stroke of the arm 52 and of taking again their normal shape when said arm 52 is retracted and the disks 194a and 194b of the ejectors come back to their seats provided in said central body 172.

A series of end stroke microswitches, positioned in suitable locations , give to the central processing unit, indicated in figure 1 as computer 90, the information about the positions taken by the arm 52 and by the pliers 54.

For example, a first microswitch 200 provided with an actuating button 202 is useful to signal the full return of the arm 52, with abutment of the counterplate 196 against the parallelepipedal blocks 150a and 150b; a second microswitch 204, provided with an actuating lever 206, is controlled by a pin 208 fixed to the bridge 154 to open the jaws 178 and 180 of the pliers 54 moving the jackets 190a, 190b and the armatures 192a, 192b of the electromagnets; a third microswitch 210, provided with a button 212, is actuated from a small block 214 secured to the bridge 154 to indicate the full advancement of the rods 152a and 152b of the movable arm 152, whereas the fourth microswitch 216, provided with an actuating lever 218, is sidewise fixed onto the central body 172 of the pliers 154 to signal the possible presence of a cartridge in said pliers.

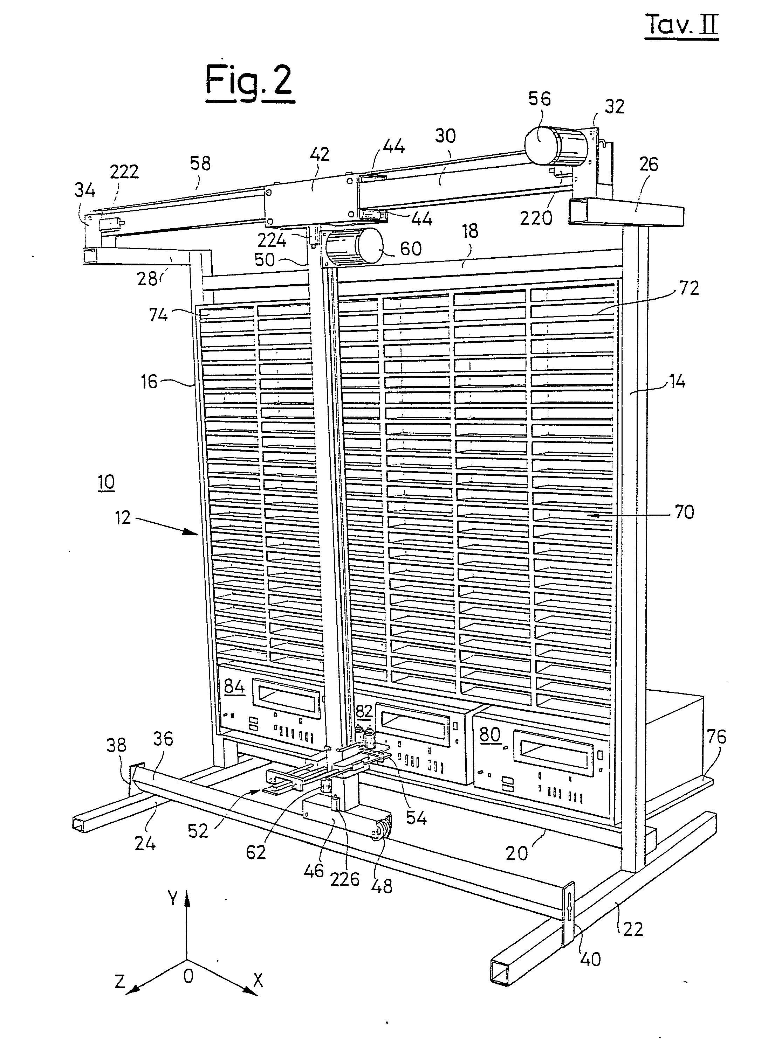

Lastly, considering figure 2, two microswitches 220 and 222 , respectively at the right and at the left side of the upper guide or rail 30 signal the presence of the upper carriage 42 fully at the right or fully at the left side along the horizontal axis X, whereas two microswitches 224 and 226, respectively at the upper end and at lower end of the vertical guide or rail 50, signal the presence of the arm 52 fully upwardly or fully downwardly along the vertical axis Y.

The operation of the present invention is as follows:

Upon insertion within the respective slots 114 and 116 of the magnetic disk reading and recording assembly 112 the respective disks containing the apparatus operation programme and the file containing the identification data of the cartridges present in the single pigeon-holes 72 of the filing cabinet 70, the computer assembly 90 is switched on or, if already switched on, its functions are reset by pushing a proper button of the keyboard 100 (for instance the key bearing the indication "RESET" present on the keyboard of most computers), whereby the computer is ready to receive instructions, by presenting onto the screen of its display 110 the hour, and possibly the date followed by the main menù and meanwhile controls are send to the apparatus 10 to place the pliers 54 in the starting position corresponding to the "HOME" pigeon-holle 74 with the arm 52 fully retracted.

The operator can press the proper keys of the keyboard 100 for the desired controlls.

At that point the operator on the basis of the contents of the operation disk and of the cartridge file disk may compose a list or "scale" of the information or programmes already recorded which he intends to broadcast said scale possibly covering the whole day or more days, if, as it happens holidays in period, the operation of the radio-television broadcasting station must be ensured with a minimum of survey personnel.

The operator may possibly, by using the keyboard 100 and also the opticall reader 102, modify the cartridge file, if the cartridge housed within the filing cabinet 70 are changed.

In the same manner the operator is enabled to introduce changes to the scale, either owing to received instructions, for example, through the telephon set 104, or owing to instructions received through a telematic connection with the computer 90, for instance for the insertion of alternative programmes with respect to the programmes - scheduled onto the scale or to insert direct connections and the like.

Summing up, the computer 90 controls the selection of the tape cartridges contained within the pigeon-holes 72 of the filing cabinet 70, the transfer of the same to the recording-playing devices 80, 82 and 84, the positioning of the tapes of the said cartridges to have them started at the desired point, at the desired time, and selection by the direction desk 92 of the services or programmes, played by the recording-playing devices 80, 82 and 84, which must be broadcast in succession.

The operationg is now explained of the device 10 embodyng the present invention.

In said a device basically the following movements are to be provided:

a) reset of the arm 52;

b) displacements of cartridges between pigeon-holes 72;

c) displacements of cartridges between pigeon-holes 72 and recording-playing devices 80, 82 and 84;

d) displacements of cartridges between recording-playing devices 80, 82 and 84 and pigeon-holes 72;

e) displacements of cartridges between recording-playing devices 80, 82 and 84.

The reset consists in initializing the pliers 54 which must be closed, retracted and placed in front of the pigeon-holes 74 at upper left corner upon the machine it switched on; during the operation, owing to an express request of the operator, owing to positioning errors or cartridges within the pigeon-holes 72 or within the recording-playing devices 80, 82 and 84, or owing to erroneus requests from the operator (for example the request of a cartridge different from those stored within the filing cabinet 70).

To understand the displacement of the cartridges the tern of perpendicular axes X, Y and Z, indicated in the lower part of figure 2, must be taken into account.

The displacement of cartridges among pinion-holes 72 takes place by displacing the first arm 52 along the axis X, starting from the position of the pigeon hole HOME 74, by actuating the step-by step motor 56 which, through the belt 58, causes the carriages 42 and 46 to be displaced and consequently the vertical rail 50 to move up to the desired position X which is consequently indicated from the computer 90.

Said position in the present embodiment shall be indicated by an integer of between 0 and 5 since every line comprises six pigeon-holes and consequently the step-by-step motor 56 shall move by a number of steps of between 0 and 5.

Then the arm 52 is displaced along the axis Y by means of the step-by-step motor 60 and of toothed belt (not shown) thus moving the said arm along the vertical rail 50 up to the desired position Y, indicated by the computer 90.

Said position in the present embodiment shall be indicated by a number of between 0 and 24, since every column comprises 25 pigeon-holes and consequently the step-by-step motor 60 shall move by a number of steps of between 0 and 24.

Once the first desired pigeon-holes is arrived at, the arm 52 is advanced in the direction of the axis Z (extension of the pliers 54) up to the point in which the pliers enter the desired pigeon-holes, the said pliers open for example owing to the intervention of pin 58 on the lever 206 of the microswitch 204 controling the electromagnets for the opening of the pliers (fig. 3), encompassing with the jaws 178 and 180 the cartridge present in the said pigeon-holes 72. When the pliers 54 have encompassed with jaws 178 and 180 the cartridge, said cartridge presses the lever 218 of the microswitch 216, thus signalling to the computer 90 the presence of the cartridge in the desired pigeon hole (if no cartridge is signalled as present . the lack of actuation of the microswitch 216 is interpreted by the computer 90 as an error to be signalled to the operator and requiring corresponding actions).

Once the presence of the cartridge is assessed the computer 90 causes the arm 52 to be retracted thus extracting the cartridge from its pigeon-holes.

The retraction of the arm shall continue until the counterplate 196 shall actuate the push button 202 of the microswitch 200, signalling to the computer 90 the complete retraction of the arm 52 and consequently causing the same to stop the motor 62.

Owing to a subsequent pair of controlls for the axis X and the axis Y, by which the next position in the filing cabinet 70 to be taken by the cartridge is individuated, the same shall be displaced to the new pigeon-hole 72 to be occupied.

Once the new pigeon-hole to be occupied is reached, the arm 52 shall be pushed forwardly, introducing the cartridge in said pigeon-hole and, when the pin 208 shall actuate the lever 206 of the microswitch 204, the jaws 178 and 180 of the pliers 54 shall be open and the arm 52 stopped and subsequently retracted to abandon the cartridge in the novel pigeon-hole 72.

The arm shall be then retracted until the counterplate 196 mounted to the pliers 54 shall actuate the push button 202 of the microswitch 200 signalling to the computer 90 the complete retraction.

The displacement of cartridges from pigeon-holes 72 to recording-playing devices 80, 82 and 84 takes place as in the previous case, by bringing the arm 52 at the coordinates X and Y of the pigeon-hole 72 containing the preselected cartridge, extracting the cartridge from its pigeon-hole, lowering the arm 52 to the level of the opening of the recording-playing devices 80, 82 and 84 (the level of the opening of said recording-playing devices is reached by causing the step-by-step motor 60 to carry out a number of steps largerly greater then the maximum of 24 steps necessary to select a pigeon-hole of the filing cabinet 70) and displace it horizontally until it is in front of the opening of the pre-selected record ing -playing device (the latter succession of movements can be also inverted in the time) and then causing the arm 52 to advance for the introduction of the cartridge within the pre-selected recording-playing device. When the arm 52 is lowered to the said level of the openings of the recording -playing devices 80, 82 and 84 (which is indicated by the fact that the step-by-step motor 60 has carried out more than the maximum of 24 steps necessary for the selection of whatsoever pigeon-hole 72), the action of the plier 54 when the arm 52 is advanced becomes different. When owing to the advancement of the arm 52, the pin 208 actuates the lever 206 of the microswitch 204, the jaws 178 and 180 of the pliers 54 open, but the stroke of the motor 62 continues until the stops 168a and 168b of the rods 166a and 166b stop the central body 172 of said pliers. At that point with the jaws 178 and 180 in the open condition, the further stroke of the motor 62 causes the cylindrical rods 152a and 152b to be still advanced to push the disks 194a and 194b of the ejectors to push the cartridge out of the pliers 54 deeply within the opening of the pre-selected recording playing device, whereby a device contained in said recording-playing device is compelled to grasp the cartridge to insert it in its reading mechanism.

Once the ejection of the cartridge is completed, the arm 52, arrived at the point of maximum advancement of its stroke along the axis Z, causes the push button 212 of the microswitch 210, indicating to .the computer 90 the completion of said advancement, to. be actuated by means of the small block 214, present on the bridge 154, whereby the computer may attend firstly to the stopping and then to the retraction of the arm 52 by means of suitable controls sent to the motor 62.

The displacement of cartridges from recording-playing devices 80, 82 and 84 to pigeon-holes 72 takes place essentially in inverted manner with respect to that previously described for the displacement from the pigeon holes to the recording-playing devices.

The arm 52 takes, by means of the pliers 54, a cartridge from the preselected one of the recording-playing devices 80, 82 and 84 and places it within the pigeon hole 72 corresponding to the coordinates X and Y indicated by the computer 90, by carrying out the displacements and actions as above described in similar manner for the other displacements.

The only essential difference is that before said displacement a signal of ejection is sent to the recording-playing device of interest to permit the ejection of the cartridge which must be subsequently taken out by the pliers 54.

The displacement of the cartridge from a recording-playing device to another one takes place according to the movement of taking it from a recording playing device and introduction in the same as above described. As already stated, the apparatus and system of the present invention are particularly suitable for the automatic operation control of a radio-television broadcasting station. During the automatic operation, the apparatus combines the described movements, on the base of the scale compiled by the operator and recorded on disk, so that a continuous sequence of programmes is broadcast.

Simultaneously the central computer 90 is available to accept commands, permitting for example the temporary (or definitive) interruption of the automatic sequence, to manually insert programme or enter the "direct trasmission".

As already defined the scale consists in a list of the cartridges to be broadcast with the possible indication of the broadcasting time.

The cartridges may be indicated by means of an alfa-numerical code or by a name (title) and must be included in the cartridge file previously recorded on disk (which, in other terms means that they must be present within the filing cabinet 70). If this situation does not occur, an error message will be issued. Once the scale is created (and recorded on disk) the program of automatic operation is started.

The apparatus 10 takes out the first cartridge indicated in the scale and inserts it in the first recording-playing device 80, 82 and 84, which is free, and thereafter the beginning of the portion to be broadcast is searched.

The recorder is then stopped for a while before the beginning of the part to be broadcast to permit the syncronizing of subsequent parts, avoiding the loss of syncronisms.

At that point at the time indicated in the scale and detected by the internal clock 118, the recording-playing device is started in playing condition and the direction desk 92 is controlled so as to broadcast the same part of programme.

Meanwhile the second cartridge indicated in the scale is taken out to be inserted within the second recording-playing device which is free and it is brought to be beginning of the part of programme to be broadcast.

This operation is repeated up to exhaustion of the recording-playing devices which are available (three in the present example but in greater number if necessary).

While these operations are carried out, the computer does control the part of programme, being broadcast waiting for the end of the part of perfomrnace to be broadcast. which is indicated by proper signals (marker) recorded on the cartridge during the cutting.

Just before the end of the part of programme, the recording-playing device with the next part of programme to be broadcast is put in the playing condition, and thereafter at the end of the part of programme being broadcast, through the direction desk 92, the next programme is broadcast.

The cartridge containing the broadcast programme is rewound taken by the pliers 54 and put again at its place within the filing cabinet 70.

The recording-playing device which is now free is signalled as "free" and filled in with the next cartridge of the scale.

As already mentioned, at every time the operator may request the manual control and transmit "directly" programmes or "live" transmission but moreover the direct transmissions can be recorded in the scale indicating the times at which they must take place.

The return to automatic operation takes place upon manual control.

The scale starts again from the immediately next programme on the basis of the time detected by the clock.

Directions shall be required if, as it is probable, intervals are to be covered owing to the unforeseable duration of the direct transmissions.

In the intervals between one operation and the next one the apparatus is available for the compilation of the scale of subsequent days or for other requirements which might be made present in the future.

It has been here described a preferred embodiment of the present invention, and , obviously, every solution and equivalent measure with respect to those above disclosed to obtain the aforesaid results must be considered as within the scope of the invention.

More particularly it is, within the scope of the present invention to use a number of video recording-playing devices different from that shown in the enclosed drawings, as well as the use of pliers with closure caused by energizing its electromagnets and opening caused by the energizing.

In the same manner the exchange of the order of succession of the displacements of the arm 52 and the addition of auxiliary equipments, such as equipments for the cable or radio bridge connection to other television networks or cinematographic projectors made suitable for the television broadcasting, fall within the scope of the invention.

The attention is recalled to the fact that the apparatus of the present invention, through absolutely obvious modification, can be made adapted to other uses such as the handling of tape or record libraries permitting the same programmed representation according to a scale which can be predetermined or changeable at will from the attending personnel likewise to what happens in a radio and, or television broadcasting station.

Likewise obvious is the use of the present apparatus in shops for the selling of recorded audio and, or video products such as records of common or compact type, cartridges of audio and video magnetic tapes, videos disk or the like, in apparatus for the quick demonstration of said products by the customers; likewise obvious , with the due modifications, is the use of the present apparatus in the automatic handling of products to be generically distributed and or in stores , particularly of the type specialized in the handling of components such as mechanical, electrical, electromechanical, electronic or like components and or spare parts, in which a computer, like the computer 90, may handle in terms of identification, localization and amounts, items placed in cells or pigeon-holes like the pigeon-holes 72 of the filing cabinet 70, attending to the supplying and to up dating of said store as well as to the taking out from the same.

## Claims

1. A method for the handling or automatic forming of pre-recorded radio or television programmes, using a limited number of playing devices (80, 82, 84), characterized by the use of a store having addressable access containing the substrate of audio-video recordings onto which there are recorded a programmes, communications and generally all the information to be broadcast, which can be inserted according to a programmed succession in said playing devices (80, 82, 84) by means of mechanical means (50, 54) by which said substrates are displaced from said store to said playing devices (80, 82, 84) and viceversa, controlled by computer means (90) which are programmed, besides for controlling the mechanical means, (52, 54), also for the actuating of said playing devices (80, 82, 84).

2. A method according to claim 1, characterized in that said playing devices (80, 82, 84) are playing device for magnetic tape of the audio and/or video-tape and the substrates of audio-video recordings are cartridge of magnetic tapes.

3. A method according to claim 1, characterized in that said playing devices (80, 82, 84) are playing devices for records and said recording substrates are records of common type or of compact tape, which can be playded both mechanically and optically.

4. A method according to claim 1, characterized in that said playing devices (80, 82, 84), are playing devices for video disks and said recording substrates are video disks.

5. A method according to any claim 1 to 4, characterized in that said computer means (90), besides controlling and actuating said mechanical means (52, 54) and said playing devices (80, 82, 84), are also controlling a desk 92 for the direction or mixing of images and sounds having the purpose of permitting the only broadcasting of desired images and sounds selected among the available one.

6. A method according to any claim 1 to 5, characterized in that said addressable store is formed by a filing cabinet (70), the pigeon holes (72(, of which have positions which can be identified by means of numerical coordinates, combined with a number of playing devices for magnetic tapes (80, 82, 84), by an arm (92) movable according to the coordinates of said stores and towards the openings for the introduction of the tapes within said playing device (80, 82, 84), said arm (52) being controlled by said computer means (90) to take out cartridges from said store, introducing them in said playing devices and viceversa, as well as to displace cartridges from a pigeon hole (72) to another of said store, said computer means (90) causing moreover on the basis of programme contained thereinto, the starting and the stopping and unwinding of the tapes within the same playing devices (80, 82, 84) to take place, as well as controlling a direction desk (92) having the aforesaid purpose of permitting the broadcasting only of the desired images and sounds.

7. A method according to claims 1 to 6, characterized in that said computer means (90) use clock and calendar means (118) by which times and dates are originated for broadcasting a predetermined programme, memory means (118) on which the transmission handling programme are recorded and from which general or particular directions are taken out relating to the diffusion management , display means (110) to inform an operator of the transmission programme to be carried out during a programmed tape period and printing means (106) for the permanent printing on a solid substrate, such as paper, of instructions, directions and information for station operators.

8. A method according to claim 6, characterized by providing for said movable arm 52, means carring out displacements of the said arm according to three coordinates which are mutually perpendicular (X, Y, Z) and pliers means (54) which can be controlled to grasp and free cartridges between the pigeon-holes (72) of said store and cartridge introduction openings in said playing means (80, 82, 84), said displacement means of said movable arm and said pliers means being capable of control by said computer means (90).

9. Apparatus for the handling and automatic composition of prerecorded radio-television programme, characterized by comprising a store or shed of cartridges or like substrates for audio-video recordings consisting of a rectangular matrix filing cabinet (70) subdivided in as many pigeon-holes (72) of shape suitable to containe each one one of said audio-video recording substrates, each pigeon-holes (72) having assigned thereto a pair of coordinates (X, Y), supported by a framework (12) to which a certain number of tape playing devices (80, 82, 84) is associated and having along two parallel sides two sliding guides (30, 36), for two carriages (42, 46) connected by a third guide (50) perpendicular to said parallel guides (30, 36) said third guide (50) having in turn a device slidable along a same and bearing an arm (52) which can be advanced and retracted along a direction (Z) perpendicular to both directions of the first and second guides and of the third guide and provided with pliers (54) which can be opened and closed in a controlled manner to grasp and free said audio-video recording substrates, one of said parallel guides (30, 36) being provided with a motor (56) and with transmission means (58) for the displacement of the carriages (42) bearing said third guide (50) along said parallel guides (30, 36), said third guide (50) being provided with a motor (60) and with transmittion means for the displacement of said slidable device along side third guide (50), said slidable device being lastly provided with a motor (62) and with transmission means (64, 66) for the movement of said arm (52) and said pliers (54) being provided with at least an actuator attending to its opening and closing.

10. Apparatus according to claim 1, characterized in that said playing devices (80, 82, 84) are playing devices for magnetic tapes or audio or video tape and said audio-video recording substrates are magnetic tape cartridges.

11. Apparatus according to claim 9, characterized in that said playing devices (80, 82,. 84) are playing devices for records and said recordings substrates are records of common or compact type, which can be played either mechanically or optically.

12. Apparatus according to claim 9, characterized in that said playing devices (80, 82, 84) are playing devices for video disks and said recording substrates are video-disks.

13. Apparatus according to any claim 9 to 12, characterized in that said pliers (54) consist of two parallel jaws (178, 180), at least one of which is movable, which are separated by a spacing block (172), the movable jaw (178) being movable to and from the fixed jaw (180) by means of an actuating mechanism and the whole pliers (54) being advanceable and retractable with respect to said store and to said tape playing devices (80, 82, 84) by means of at least an arm (52) axially slidable which, besides moving said pliers (54), actuates at least a pushing mechanism at the time at which after a cartridge has been inserted within the introduction opening of a tape playing device (80, 82, 84), said pliers (54) get open, in order to ensure the definitive introduction of the cartridge within the playing device (80, 82, 84), and the subsequent retraction of the pliers (54) after the cartridge has been freed.

14. Apparatus according to claim 13, characterized in that said actuating mechanism of the pliers jaws consists of a spring system (186a, 188a, 186b, 188b) by which the movable jaw is maintained closed against the fixed jaw and of at least an electromagnet (190a, 192a; 190b, 192b) which, upon energisation, causes said movable jaw (178) to be opened with respect to said fixed jaw 180.

15. Apparatus according to claim 13, characterized in that both jaws (178, 180) can be movable with respect to a pliers central body (172), the jaws being maintained in the closed condition by said spring system (186a, 188a; 186b, 188b) and in the open condition by said at least one electromagnet (190a, 192b; 190b, 192b).

16. Apparatus according to claims 13 and 15, characterized in that the axially slidable arm (52) axially slidable is at least double and terminates with two pushing mechanisms (194a, 194b) positioned in the block (172) of the pliers (52) dividing the two jaws (178, 180), said block (172) having its stroke restricted to a stroke lower than that of said slidable arm (52), the difference between the effective stroke of said arm (52) and the stroke of said block (172) determining the advancement of said pushing mechanisms (194a, 194b) and said advancement controlling also the energisation of said electromagnets (190a, 192a; 190b, 192b) causing the opening of the jaws (178, 180) of the pliers (154) to take place.

17. A method for the handling of tape libraries, record library and/or tests demonstrations in audio-video record shops, using a certain limited number of playing devices (80, 82, 84), characterized by the use of an addressable access store containing substrates of audio-video recordings onto which representation and/or programmes to be playd are recorded, which can be inserted according to a programmed succession or scale within said playing devices (80, 82, 84) by means of mechanical means (52, 54), by which said substrates are displaced from said store to said playing devices (80, 82, 84) and viceversa under the control of computer means (90) programmed, besides for the control of said mechanical means (52, 54), also for the actuation of said playing devices (80, 82, 84).

18. A method according to claim 17, characterized in that said playing devices (80, 82, 84) are playing devices for magnetic tapes of audio and/or video-tapes and said audio video recording substrates are magnetic tape cartridges.

19. A method according to claim 17, characterized in said playing devices (80, 82, 84) are playing devices for records and said recording substrates are records of common or compact type which can be played either mechanically or optically.

20. A method according to claim 17, characterized in that said playing devices (80, 82, 84) are playing devices for video-disks and said recording substrates are video-disk.

21. Apparatus for the handling of tape libraries, disks, record libraries and/or for test demonstrations in audio-video recording shops characterized by comprising a store or shed of cartridges or like substrates of audio video recordings consisting of a rectangular matrix filing cabinet (70) subdivided in a number of pigeon holes (72) of shape suitable for containing each one one of said substrates of audio-video recordings, each pigeon holes (72) having assigned thereto a pair of coordinates (X, Y), supported by a framework (12) having associated thereto a certain number of playing devices (80, 82, 84) and bearing also along two parallel sides two displacement guides (30, 32) for two carriages (42, 46) connected by a third guide (50) perpendicular to the said two parallel guides (30, 36) said third guide (50) bearing in turn a device slidable along the same including and arm (52) which can be advanced and retracted along a direction (Z) perpendicular to both directions of said first and second guides and of the third guide and provided with pliers (54) which can be opened and closed at will to grasp and free said audio-video recording substrates, one of said parallel guides (36) being provided with a motor (56) and with transmission means (58) to displace the carriages (42, 46) supporting said third guide (50) along said parallel guides (30, 36), said third guide (50) being provided with a motor (60) and with transmission means to move said slidable device along said third guide (50) said slidable device being lastly provided with motor (62) and with transmission means (64, 66) for the displacement of said arm (52) and said pliers (54) being provided with at least an actuator attending to the opening and closing thereof.

22. Apparatus according to claim 21, characterized in that said play devices are playing devices for magnetic tapes of the audio and/or video type and said audio-video recording substrates are magnetic tape cartridges.

23. Apparatus according to claim 21, characterized in that said playing devices (80, 82, 84) are playing devices for records and said recording substrates are records of common or compact type which can be played either mechanically or optically.

24. Apparatus according to claim 21, characterized in that said playing devices (80, 82, 84) are playing devices for video disks and said recording substrates are video disks.

25. Apparatus according to one of the claims 21 to 24, characterized in that said pliers (54) consist of two parallel jaws (178, 180), at least one of which is movable, separated by a spacing block (172), the movable jaw (178) being movable to and from the fixed jaw (180) by means of an actuating mechanism and the whole pliers (54) being advanceable and retractable with respect to said store and to said tape playing devices (80, 82, 84) by means of at least an axially slidable arm 52 which, besides moving said pliers (54) provides to the actuation of at least a pushing mechanism at a time at which after a cartridge has been inserted within the introduction opening of a tape playing device, (80, 82, 84) said pliers (54) open in order to ensure the definitive introduction of the cartridge within the playing device (80, 82, 84), and subsequent retraction of the pliers (54) after the cartridge has been freed.

26. Apparatus according to claim 25, characterized in that said actuating mechanisms for the pliers jaws consist of a spring system (186a, 188a; 186b, 188b) by which the movable jaw is maintained in closed condition against the fixed jaw and of at least an electromagnet (190a, 192a; 190b, 192b) which, upon energisation, causes said movable jaw (178) to open with respect to said fixed jaw (180).

27. Apparatus according to claim 25, characterized in that both jaws (178, 180) can be movable with respect to a central body of the pliers (172), being maintained in closed condition by said spring system (186a, 188a; 186b, 188b) and in the open condition by said at least one electromagnet (190a, 192a; 190b, 192b).

28. Apparatus according to claims 25 and 27, characterized in that the axially slidable arm (52) is at least double and terminates with two pushing mechanisms (194a, 194b) localized in the block (172) of the pliers (54) separating the two jaws (178, 180), said block (172) having its stroke restricted to a stroke lesser than that of said slidable arm (52), the difference between the effective stroke of said arm (52) and the stroke of said block (172) determining the advancement of said pushing mechanisms (194a, 194b) and said advancement controlling also the energization of said electromagnets (190a, 192a; 190b, 192b) determing the opening of the jaws (178, 180) of the pliers (54).

29. Method for the automatic handling or distribution and/or storing of items, particularly components or spare parts, using at least an acquisition or entering station, at least a distribution or exit station for items , characterized by the use of a store with addressable access containing the items to be distributed , to be moved according to a controlled succession between at least an acquisition or entrance station and the said adressable access store and between said adressable access store and at least one distribution or exit station, by means of mechanical means (52, 54) moving said items between said station and said store, controlled by computer means (90) programmed for the control of said mechanical means (52,54) and for the handling of the terns for identification, localization and amounts of said items and in said store, providing for the supply and up dating of said store as well as to the removal from the same.

30. Method according to claim 29, characterized in that said addressable store comprises a filing cabinet (70), the pigeon-holes (72) of which have positions which can be identified by means of numerical coordinates, combined with said acquisition or entrance station and with said distribution or exit station, by an arm (52) movable according to the coordinates of said store and to the positions of said entrance and exist stations respectively, said arm (52) being controlled by said computer means (90).

31. Method according to claims 30, characterized by providing for said movable arm (52), means carrying out the displacement of same according to three cooordinates mutually perpendicular (X, Y, Z) and pliers means (54) which can be controlled for grasping and freeing items between said pigeon holes (72) of the filing cabinet (70) and said entrance and exit stations to and from the store.

32. Apparatus for the automatic handling of distribution and/or storage of items, embodying the method of the claims 29 to 31 using the parts therein described and claimed.

Tav.I

Fig.1

# Fig.2

Tav. III

Fig. 3

Fig. 4

0 289 986